# EUROPEAN PATENT APPLICATION

(11) **EP 1 197 928 A2**
(43) Date of publication of application: **17.04.2002**
(21) Application number: 01124448.0
(22) Date of filing: 11.10.2001
(51) Int. Cl.: G07F 7/10

(54) **Payment roaming - payments through various network institutions without regards to time or locations of the payment appliances**

(30) Priority: 11.10.2000 US 688270
(71) Applicant: Hewlett-Packard Company, A Delaware Corporation, Palo Alto, CA 94304 (US)
(72) Inventor: Villaret, Jean-Marc, 75020 Paris (FR); Taylor, William Stuart, Cupertino, CA 95014 (US); Ritschel, Kevin, San Jose, CA 95137 (US)
(74) Representative: Schoppe, Fritz, Dipl.-Ing.

(57) **Abstract**

Techniques are provided for transacting payments from customers. In one aspect, a customer may pay for a product or a service without regards to time or his location as long as the customer has access to a payment-enabled appliance, which may be hosted by different network institutions such as Sky TV, Pac Bell, BuyNow.com, etc. In such conditions, a customer, for example, may use a mobile phone of a mobile merchant to pay for delivery goods brought by the merchant to the customer's site, which can be outside of the merchant's mobile phone roaming area. Similarly, the customer may use a set-top box in a hotel room to pay for TV cable services while different set-top boxes may be hosted by different network institutions.

## Description

### RELATED APPLICATIONS

This application claims the benefit of the provisional application serial number 60/229274, filed on August 30, 2000, entitled "Payment Roaming," by Jean-Marc Villaret et al.

### FIELD OF THE INVENTION

The present invention relates generally to payment transactions and, more specifically, to payments through various network institutions without regards to time or locations of the payment appliances.

### BACKGROUND OF THE INVENTION

Paying by a payment card (e.g., VISA, Mastercard, EMV, American Express, etc.) is very common, which usually requires a point-of-sale (POS) device, a card-issuing bank, an acquirer bank, and a merchant bank. Swiping a payment card through a POS device initiates a payment transaction. The card-issuing bank issues the card to the customer, and each time the customer uses the card to make payments, the card-issuing bank pays for the customer by authorizing the acquirer bank to transfer the payment amount from the card-issuing bank to the merchant bank. The card-issuing bank later bills the customer, usually once a month. Typically, the acquirer bank charges the merchant a certain fee for processing a payment transaction.

Mobile phones have also been used in payment transactions. In one approach, a user uses a cellular phone to dial a telephone number associated with a vending machine or to beam payment information to that machine to buy products and services from that machine. The user then receives the vending-machine-transaction bill through the bill for the cellular phone. Currently, there is no set-up to separate the cellular phone bill and other bills incurred through using the cellular phone. Further, if the cellular phone is taken out of its home-based, then the cellular phone may not function or the customer has to deal with the roaming issues of the cellular phone. Other methods of payments include using a PC connecting to the Internet, using a set-top box provided by a service provider, etc.

Using a PDA or a cellular phone combined with a payment card has not been available but may be soon implemented. Such implementation using the current POS payment approach will inherit the problem of a "closed" environment in which a network institution usually hosts a private payment system implemented with a specific technology. Payment devices in these payment systems generally communicate via a private network that does not communicate with another network. For example, a set-top, e.g., from Sky TV, is connected only to a Sky TV network; a cellular phone hosted by Sprint only communicates through a Sprint network; and a PDA hosted by Palm.net only communicates through a Palm.net network, etc. In many cases, particularly in cellular phones, communication protocols change from areas to areas and from countries to countries. Consequently, a cellular phone does not work in combination with another device such as a POS device, a PDA, or a PC, etc. Further, a customer, through a specific payment device may deal with a specific merchant, but not with other merchants. For example, a customer using a set-top box hosted by Sky TV may only pay for services provided by Sky TV, but may not pay for services provided by, e.g., France Telecom, Pac Bell, Amazon.com, etc. Additionally, a customer having an American VISA card cannot use a cellular phone hosted by a French company to make card payments via that cellular phone because the French telephone system does not support the American VISA card system, which usually uses only the magnetic-stripe technology.

Payment by credit cards over the Internet may not be safe. Presently, a customer may provide credit card information to a website to buy products/services. However, it is difficult for the customer to determine whether that website is from a real merchant or from someone faking the merchant. Similarly, a merchant does not know for sure whether the customer uses his card, a stolen card, or a faked card. Because of the high risk of fraud, a merchant has to pay high fees for the acquirer bank to process the payments. These high fees in turn reflect in high costs for customer products. A customer may include authentication keys and certificates in his PC for better secured communications over the Internet. However, this requires complicated and heavy loading of authentication software and logistic information into the customer's PC. Further, the authentication software may be costly, and if the customer upgrades his disk-drive or his PC, then he must reload the software. The emerging trend is to get payment information including payment authentication keys and certificates from a payment wallet hosted on a web-based server. This requires that only the owner of the wallet have access to that wallet.

Based on the foregoing, it is clearly desirable to solve the above deficiencies. It is also desirable that all payment transactions are secure and trustworthy.

### SUMMARY OF THE INVENTION

Techniques are provided for transacting payments from customers. In one aspect, a customer may pay for a product or a service without regards to time or his location as long as the customer has access to a payment-enabled appliance, which may be hosted by different network institutions such as Sky TV, Pac Bell, BuyNow.com, etc. In such conditions, a customer, for example, may use a mobile phone of a mobile merchant to pay for delivery goods carried by the merchant to the customer's site, which can be outside of the merchant's mobile phone roaming area. Similarly, the customer may use a set-top box in a hotel room to pay for TV cable services while different set-top boxes may be hosted by different service providers or network institutions. In the above examples, a mobile phone with payment capabilities or a set-top box is a payment-enabled appliance.

In one embodiment, the techniques described herein call for a customer operator and a plurality of appliance operators each of which being associated with a payment appliance. The customer operator hosts a plurality of customer electronic wallets that include the customers' payment information. To initiate a payment transaction, a customer, through a payment-enabled appliance and a corresponding appliance operator, activates the customer's wallet. This enables the customer operator to interact with a financial operator to make payments using the customer's information in the customer's wallet. In one embodiment, the customer operator and the appliance operators are members of a payment-roaming community in which the members use "payment-roaming" identities to communicate with one another. Payment-roaming identities may be secret keys and authentication certificates used in encrypting and signing messages. For example, an appliance operator must pass an authentication check that it uses a payment-roaming key to communicate with a customer operator before the customer operator receives messages from and replies messages to the appliance operator. Similarly, the customer operator must pass an authentication check that it uses a payment-roaming key to communicate with the appliance operator before the appliance operator receives messages from and replies messages to the customer operator.

### BRIEF DESCRIPTION OF THE DRAWINGS

The present invention is illustrated by way of example, and not by way of limitation, in the figures of the accompanying drawings in which like reference numerals refer to similar elements and in which:
FIG. 1 shows a payment-roaming network in accordance with one embodiment of the techniques disclosed herein;
FIG. 2 is a flowchart illustrating the process steps in accordance with one embodiment; and
FIG. 3 shows a block diagram of a computer system upon which one embodiment may be implemented.

### DETAILED DESCRIPTION OF THE PREFERRED EMBODIMENT

In accordance with the techniques described herein that may be referred to as payment roaming, a customer banking with different financial institutions is enabled to securely make payments from various payment media without regards to time, the customer's location, the customer's banking institution, or the protocols used in the payment media, as long as the customer has access to a payment-enabled appliance. These appliances may be private, attended in a store, or unattended in the public, and may be implemented with different payment schemes. Examples of these payment-enabled appliances include a mobile phone, a personal digital assistant (PDA), a wrist watch, a vending machine, a set-top box, a kiosk, a PC, a home-game station, or any other devices that have payment capabilities. In one embodiment, a payment transaction from a customer is automated in which the only human interaction is that of the customer who, through a payment appliance, provides necessary information for the payment transaction to be performed.

In the following description, for the purposes of explanation, numerous specific details are set forth in order to provide a thorough understanding of the described techniques. However, it will be apparent to one skilled in the art that the techniques may be practiced without these specific details. Further, well-known structures and devices are shown in block diagram form in order to avoid unnecessarily obscuring the techniques.

### THE PAYMENT-ROAMING NETWORK

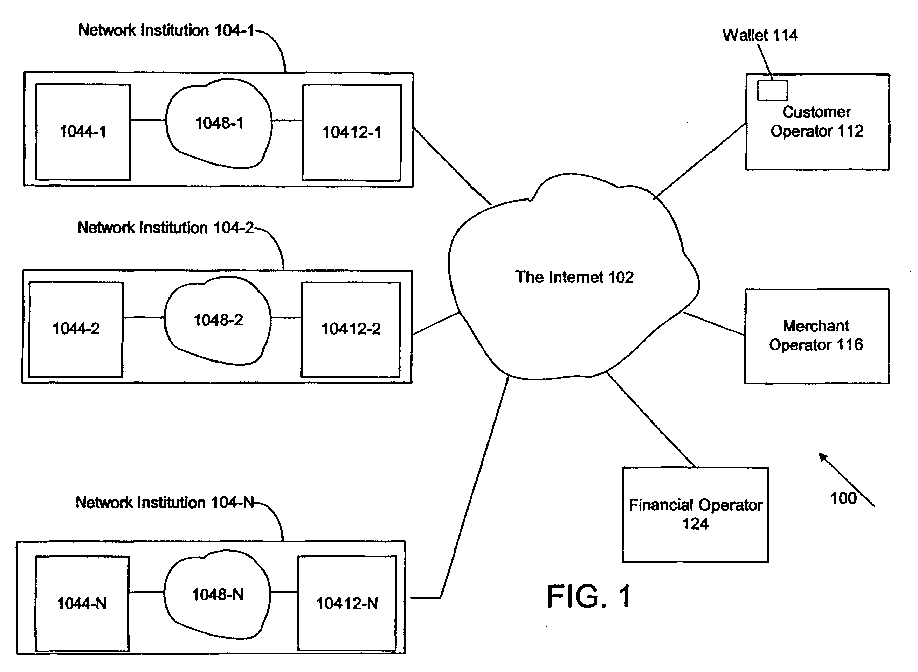

FIG. 1 shows a payment-roaming network 100 in which one embodiment of the techniques described herein may be implemented. Network 100 includes a plurality of network institutions 104-1 to 104-N, a plurality of customer operators 112, a plurality of merchant operators 116, and a plurality of financial operators 124, all of which are connected to a communication network 102. However, for illustrative purposes, FIG. 1 shows only one of each customer operators 112, merchant operators 116, and financial operators 124.

### THE COMMUNICATION NETWORK

Communication network 102 is used as means for appliance operators 10412, customer operators 112, merchant operators 116, and financial operators 124 to communicate with each other. Network 102 can be a single network or a combination of networks that utilize one or a combination of communication protocols including, for example, TCP/IP, cable network, digital subscribe line (DSL), or any other communication protocol. In one embodiment, network 102 is the Internet.

### THE NETWORK INSTITUTIONS

Network institutions 104 typically provide payment media through which a customer pays for transactions that may or may not relate to the services provided by institutions 104. Examples of services and institutions 104 include mobile phones from France Telecom, Cellular One, Sprint, etc.; set-top boxes to pay for products and services in hotel rooms from Sky TV; Internet transactions from BuyNow.com, Amazon.com, etc.; PDA connecting to either a private network or an Internet service provider such as AOL, Netfree.com, etc. In these conditions, a customer may use any private or public payment-enabled appliance to pay for products and/or services provided by numerous merchants who take payment over communication network 102.

In one embodiment, payment media of network institutions 104 are transparent to the customers. That is, the customers may make payments without regards to the technologies, types of networks, or protocols used in these payment media. A set of payment media may include at least one payment-enabled appliance 1044, a network 1048, and an appliance operator 10412. Payment-enabled appliance 1044 is a device or any means from which a customer initiates and/or validates payment transactions. Technologies for a payment-enabled appliance 1044 may include magnetic-strip readers, smart card readers, infra-red capabilities, bluetooth capabilities, keypads and displays, web-based devices, etc. For example, each of a PDA (e.g., a Palm pilot, a Visor), a phone, a parking meter, a game station, etc., may include a web browser for making payments through the Internet. Similarly, a PDA, a mobile phone, a set-top box, a set-top box integrated into a television, a vending machine, a kiosk, etc., may include a card payment slot to receive payments from various cards such as Visa, Mastercard, EMV, Versatel, etc. Those skilled in the art will recognize that an EMV-compliant device allows payment from either a Europay, a Mastercard, or a Visa card. Further, an EMV card is generally compliant with a smart-card standard. In accordance with the techniques described herein, a payment-enabled appliance 1044, either mobile or fixated, is functional regardless of locations as long as the appliance 1044 can communicate with its corresponding network 1048 and appliance operator 10412.

Network 1048 is usually a private communication network or communication tube hosted by a corresponding network institution 104. In various situations, a network institution 104 may use a particular network 1048 for a particular service. For example, Sky TV uses a cable network to broadcast movies; France Telecom uses a Global System for Mobile Communication (GSM) network to conduct mobile phone businesses, and Buynow.com uses the Internet for sales of products and services. However, network 1048 may be a public network or a combination of private and public networks. A public network may be the Internet, a 800 or 900 pay phone network, etc. Information related to customer payments passes from payment appliance 1044 through network 1048 to appliance operator 10412.

Appliance operator 10412 acts as a liaison between a corresponding network institution 104 and a customer operator 112. Appliance operator 10412 thus receives and transmits information between payment appliance 1044 and customer operator 112. This information includes, for example, customer's identification, secret codes to access payment wallets 114 hosted in customer operator 112, payment amount, payment confirmation, etc. Where appropriate, appliance operator 10412 receives and transmits the payment information with proper encryption and authentication certificates.

In one embodiment, a customer seeking to make payments through a network institution 104 does not have to be a member or to be in a business relationship with that institution 104, as long as that institution 104 and the organization hosting customer operators 112 are members of a "roaming-payment community" (discussed below). Network institution 104 does not need to know the merchant with which the customer is engaging in a business transaction. The customer uses a payment appliance 1044 with a corresponding network 1048 and appliance operator 10412 to get access to customer operator 112 and wallet 114 in order to transact payments with the merchant.

Because using the payment media of a network institution 104 does not require that a customer be a member of, or have a business relationship with, a particular network institution 104, various parties benefit. Merchants, network institutions 104, and other business institutions benefit from the use increase of the payment media. For example, both the Marriott hotel and the Sky TV network institution 104 benefit in the following exemplary scenario. The Marriott hotel allows Sky-TV network to have set-top boxes in each of Marriott's rooms. Because customers may use the set-top boxes to pay for products and services other than those provided by Sky TV, the use of the set-top boxes increases. Consequently, Marriott gains by charging customers using set-top boxes in Marriott's rooms. Sky TV may charge Marriott a percentage of the use by Marriott's customers, Sky TV benefits, etc. Further, a customer can use various network institutions 104, with which the customer may not have account with, to activate his payment wallets 114 for various payment purposes. This is advantageous over previous approaches wherein a customer must have an account with a network institution 104 to pay for services and products provided only by that institution. Since each of the network institutions 104 may host a different technology in each of its payment media 1044, 1048, and 10412, a customer accesses his payment wallet 114 through different kinds of payment media. Additionally, because network 100 may be operating 24 hours a day, seven days a week, and a payment appliance 1044 may be located in any part of the world, a customer may make payments without regards to time or his location.

### THE CUSTOMER OPERATOR

Customer operator 112 may be referred to as a payment engine or a wallet server and is generally hosted by a bank, an Internet service provider, an Internet portal, or a network institution 104, etc. In one embodiment, because customer operator 112 is connected to the Internet, customer operator 112 may be accessible via a web browser. Consequently, any network institution 104 having payment media accessible to the Internet can utilize customer operator 112. In various situations, a customer operator 112 may also be an appliance operator 10412 of a network institution 104. In such conditions, a customer using payment media of a first network institution 104 has access to payment media of a second network institution 104.

Customer operator 112 hosts a plurality of electronic wallets 114, each of which corresponds to a customer who generally has an account with the institution hosting customer operator 112. Conversely, a customer may have more than one electronic wallet 114 hosted by one or more customer operators 112. For example, a customer may have a personal wallet with America Online, a corporate wallet with Budget-Rent-a-Car, a family wallet with Bank of America, etc. Normally, payment wallets 114 include customer information such as names, address, shipping address, credit card and debit card numbers, etc. In one embodiment, a customer accessing his payment wallet 114 uses different authentication mechanisms to activate this wallet 114. Depending on implementations, authentication mechanisms vary, including either one or a combination of the following exemplary methods: customer's identification and password, challenge and response schemes, identifications with enhanced secured identification module (SIM) cards, and WAP identification module (WIM), etc.

Customer operator 112 does not need to know the type of payment appliance 1044 associated with a corresponding appliance operator 10412. Customer operator 112 does not need to know the technologies used in each of the payment appliance 1044, network 1048, or operator 10412. Consequently, customer operator 112 does not need to know whether a payment appliance 1044 is a set-top box, a mobile phone, or a PDA connecting to the Internet, etc.

After wallet 114 in customer operator 112 is activated, operator 112, wallet 114, merchant 116, and financial operator 124 interact to complete the payment transactions, including using the traditional payment methods.

### THE MERCHANT OPERATOR

Merchant operator 116 is associated with one or more merchants, which may be any entity seeking to sell products and/or services. A merchant may sell his products and services through a payment appliance 1044 such as a set-top box, a mobile phone, a PDA, etc., or through a webiste. The merchant may also provide advertisements to be displayed, for example, on a TV in order to solicit sales through a set-top placed near a TV in a hotel room, etc. Examples of merchants include Sky TV, Pac Bell, Buynow.com, Amazon.com, etc.

### THE FINANCIAL OPERATOR

Financial operator 124 processes payments between customers and merchants. A traditional merchant acquirer bank may function as a financial operator 124. For example, financial operator 124, having enough payment information for the customer and for the merchant, initiates transferring the payment amount from the card-issuing bank to the merchant's bank.

### THE PAYMENT-ROAMING COMMUNITY

In accordance with the techniques disclosed herein, network institutions 104 and the institutions hosting customer operators 112 are members of a "payment roaming" community so that operators of these members can freely and securely communicate with one another in a trusted manner. Alternatively speaking, appliance operators 10412 and customer operators 112 are members of the payment-roaming community. As a result, a customer having an account with one of the community members may use any payment appliance 1044 to make payments as long as that appliance is hosted by a member of the community. Consequently, customers of non-members may not use appliances of members. Further, because a customer may use an unknown payment appliance 1044 in public to make payments, trust and security are considered in transactions using network 100 of FIG. 1. As trust and security are established between members of the payment-roaming community, each appliance operator 10412 and customer operator 112 can securely exchange information.

Generally, a first operator of a member seeking to communicate with a second operator of a member must pass an authentication check by the second operator. For example, if an appliance operator 10412 seeks to communicate with a customer operator 112, then customer operator 112 must be satisfied that appliance operator 10412 is hosted by a member of the payment-roaming community. In such conditions, a customer operator 112, receiving the payment information including information to activate the customer's wallet 114, verifies the sender and appropriate authentication before allowing access to the customer's payment wallet 114. Similarly, appliance operator 10412 must be satisfied that customer operator 112 is also hosted by a member of the same community. In one embodiment, recognizing members uses payment-roaming identities. For example, the members register with a central payment-roaming authority, which in turns provide roaming-payment identities for each of the appliance operators 1044 and customer operators 112. Each operator, having a payment-roaming identity, is recognized by other operators. Consequently, a new member, e.g., a new network institution 104 hosting a new appliance operator 10412, or a new institution hosting a customer operator 112, seeking to join the payment-roaming community acquires a payment-roaming key from the payment-roaming authority in order for the new operator to communicate with existing operators of network 100. There is no need for the new member to make individual arrangements with existing members of the community.

In one embodiment, SETCO (www.setco.com) serves as the payment-roaming authority, which uses a root-key mechanism to provide secret keys and authentication certificates for operators 1044 and 112. In this root-key scheme, non-root keys are generated from one or more intermediate keys from the root key. For example, in a master-daughter Public Key Infrastructure (PKI) scheme, SETCO retains a master key from which daughter keys are generated. Granddaughter keys are then generated from daughter keys, and great granddaughter keys are generated from granddaughter keys, etc. In one embodiment, a third-party institution such as Verisign, Cybertrust, GTE, etc. delivers payment-roaming keys and certificates to payment-roaming operators. The root-key scheme by SETCO is herein incorporated by reference.

Depending on implementations, a Secure Socket Layer (SSL) standard, or any other secure communication standard may be used in conjunction with the payment-roaming keys and certificates between appliance operators 10412 and customer operators 112. Further, the protocols used in these communications may be based on the Ravest, Shamir, and Adelman (RSA) or the Ellyptic Curve Cryptography (ECC) technology, using asymmetric keys. The standards for the RSA and ECC technologies are herein incorporated by reference. Those skilled in the art will recognize that either an SSL, an RSA, or an ECC standard is an approach for encrypting and decrypting messages. Further, the RSA or ECC standard is also used for a sender to sign a message and for a recipient to identify the sender and to authenticate the message.

In one embodiment, a pair of an appliance operator 10412 and a customer operator 112 uses authentication information known only between that pair of operators to communicate with one another. Consequently, if the payment-roaming community comprises n number of appliance operators 10412 and m number of customer operators 112, then an appliance operator 10412 has m sets of authentication information to communicate with m customer operators 112, each set corresponds to a unique customer operator 112. Similarly, a customer operator 112 has n sets of authentication information to communicate with n appliance operators 10412. As a result, a new network institution 104 joining the payment-roaming community contacts all organizations hosting m customer operators 112 to get m set of authentication information to communicate with m customer operators 112. Similarly, an institution hosting a new customer operator 112 contacts all n network institution 104 to acquire n set of authentication information to communicate with n appliance operators 10412.

In one embodiment, the E-speak protocol of Hewlett-Packard of Palo-Alto, California, can be used to exchange messages between appliance operators 10412 and customer operators 112. The E-speak protocol is herein incorporated by reference.

### PROCESS STEPS IN USING THE DISCLOSED TECHNIQUES

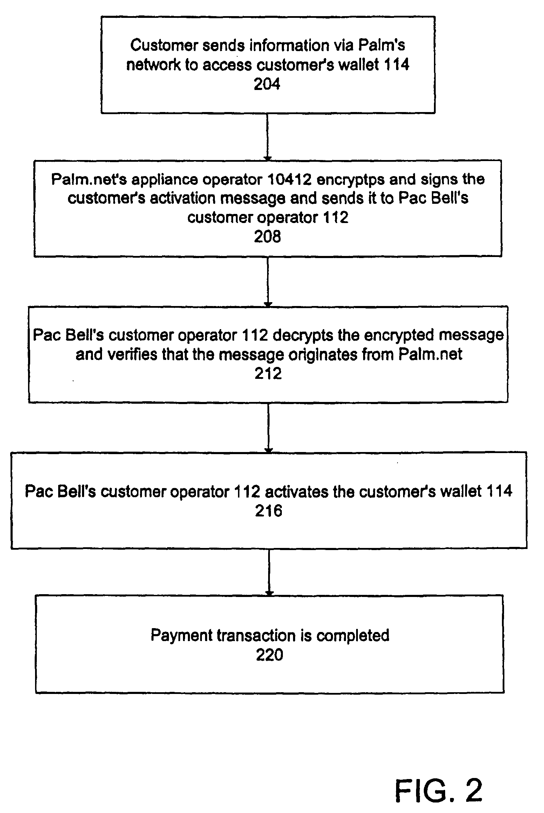

FIG. 2 is a flowchart illustrating the process steps in accordance with one embodiment. In this FIG. 2, a customer has an account with a network institution 104, e.g., the Pac Bell telephone company, which hosts the customer's payment-enabled mobile phone as a payment appliance 1044, network 1048, and appliance operator 10412. Pac Bell's appliance operator 10412 also serves as Pac Bell's customer operator 112, and, consequently, hosts the customer's wallet 114. Further, the customer is out of Pac Bell's phone service area, i.e., the customer cannot use Pac Bell's network 1048 to reach Pac Bell's appliance operator 10412 or customer operator 112. This, in various prior approaches, prevents the customer from using the customer's wallet 114 in Pac Bell's customer operator 112 to make payments. In addition, for illustrative purposes, another network institution 104, e.g., the Palm.net company hosts a payment-enabled Palm pilot as a payment appliance 1044, a network 1048, and an appliance operator 10412. Both Pac Bell and Palm.net are members of a payment-roaming community. In accordance with the techniques disclosed herein, the customer is able to use a Palm pilot to access the customer's wallet 114 hosted in Pac Bell's customer operator 112 to make payments.

The customer in step 204 uses a Palm pilot operated or owned by any user in order to send information to activate the customer's wallet 114 via Palm's network 1048 and appliance operator 10412. The user of the Palm pilot may or may not have an account with members of the payment-roaming community, and the Palm pilot's payment capability includes, e.g., an Internet browser, a slot accepting a payment card, etc.

Palm.net's appliance operator 10412 in step 208 encrypts and signs the customer's activation message, then sends the encrypted and signed message to Pac Bell's customer operator 112. This is possible because Pac Bell and Palm.net are members of the payment-roaming community. In one embodiment, the Palm.net's identity as a member of the payment-roaming community is used to sign the message.

Pac Bell's customer operator 112 in step 212 decrypts the encrypted message and verifies that the message originates from an appliance operator 10412 of a member of the payment-roaming community, e.g., Palm.net.

If the message originates from an appliance operator 10412 of Palm.net, e.g., a member of the payment-roaming community, then Pac Bell's customer operator 112 in step 216 activates the customer's wallet 114.

In step 220, the payment data in wallet 114 together with payment data received from Palm's payment appliance 1044 are used by merchant operator 116 and financial institution 124 to complete the payment transaction.

### COMPUTER SYSTEM OVERVIEW

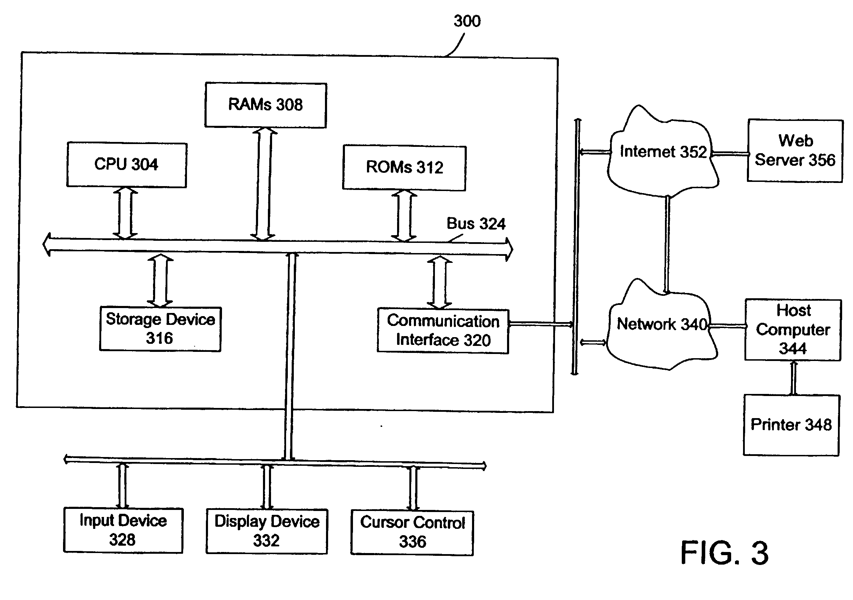

FIG. 3 is a block diagram showing a computer system 300 upon which an embodiment of the invention may be implemented. For example, computer system 300 may be implemented to operate as an appliance operator 10412, a customer operator 112, a merchant operator 116, or a financial operator 124, etc. Alternatively, computer system 300 may be used to access the Internet for payments in accordance with the techniques described herein.

In one embodiment, computer system 300 includes a processor 304, random access memories (RAMs) 308, read-only memories (ROMs) 312, a storage device 316, and a communication interface 320, all of which are connected to a bus 324.

Processor 304 controls logic, processes information, and coordinates activities within computer system 300. In one embodiment, processor 304 executes instructions stored in RAMs 308 and ROMs 312, by, for example, coordinating the movement of data from input device 328 to display device 332.

RAMs 308, usually being referred to as main memory, temporarily store information and instructions to be executed by processor 304. Information in RAMs 308 may be obtained from input device 328 or generated by processor 304 as part of the algorithmic processes required by the instructions that are executed by processor 304.

ROMs 312 store information and instructions that, once written in a ROM chip, are read-only and are not modified or removed. In one embodiment, ROMs 312 store commands for configurations and initial operations of computer system 300.

Storage device 316, such as floppy disks, disk drives, or tape drives, durably stores information for used by computer system 300.

Communication interface 320 enables computer system 300 to interface with other computers or devices. Communication interface 320 may be, for example, a modem, an integrated services digital network (ISDN) card, a local area network (LAN) port, etc. Those skilled in the art will recognize that modems or ISDN cards provide data communications via telephone lines while a LAN port provides data communications via a LAN. Communication interface 320 may also allow wireless communications.

Bus 324 can be any communication mechanism for communicating information for use by computer system 300. In the example of FIG. 3, bus 324 is a media for transferring data among processor 304, RAMs 308, ROMs 312, storage device 316, communication interface 320, etc.

Computer system 300 is typically coupled to an input device 328, a display device 332, and a cursor control 336. Input device 328, such as a keyboard including alphanumeric and other keys, communicates information and commands to processor 304. Display device 332, such as a cathode ray tube (CRT), displays information to users of computer system 300. Cursor control 336, such as a mouse, a trackball, or cursor direction keys, communicates direction information and commands to processor 304 and controls cursor movement on display device 332.

Computer system 300 may communicate with other computers or devices through one or more networks. For example, computer system 300, using communication interface 320, may communicate through a network 340 to another computer 344 connected to a printer 348, or through the world wide web 352 to a web server 356. The world wide web 352 is commonly referred to as the "Internet." Alternatively, computer system 300 may access the Internet 352 via network 340.

Computer system 300 may be used to implement techniques described above. In various embodiments, processor 304 performs the steps of the techniques by executing instructions brought to RAMs 308. In alternative embodiments, hard-wired circuitry may be used in place of or in combination with software instructions to implement the described techniques. Consequently, embodiments of the invention are not limited to any one or a combination of software, hardware, or circuitry.

Instructions executed by processor 304 may be stored in and carried through one or more computer-readable media, which refer to any medium from which a computer reads information. Computer-readable media may be, for example, a floppy disk, a hard disk, a zip-drive cartridge, a magnetic tape, or any other magnetic medium, a CD-ROM, or any other optical medium, paper-tape, punch-cards, or any other physical medium having patterns of holes, a RAM, a ROM, an EPROM, or any other memory chip or cartridge. Computer-readable media may also be coaxial cables, copper wire, fiber optics, acoustic, or light waves, etc. For example, the instructions to be executed by processor 304 are in the form of one or more software programs and are initially stored in a CD-ROM being interfaced with computer system 300 via bus 324. Computer system 300 loads these instructions in RAMs 308, executes some instructions, and sends some instructions via communication interface 320, a modem, and a telephone line to a network (e.g. 340, the Internet 352, etc). A remote computer, receiving data through a network cable, executes the received instructions and send the data to computer system 300 to be stored in storage device 316.

In the foregoing specification, the invention has been described with reference to specific embodiments thereof. It will, however, be evident that various modifications and changes may be made thereto without departing from the broader spirit and scope of the invention. The specification and drawings are, accordingly, to be regarded as illustrative rather than as restrictive.

## Claims

1. A method for transacting payments from customers, comprising the steps of:
providing a plurality of appliance operators each of which being associated with at least one payment appliance;
providing a plurality of customer operators hosting wallets associated with the customers; wherein an appliance operator and a customer operator communicate with each other only if one passed an identification check by the other; and
upon a payment transaction,
a customer activating a wallet associated with the customer through a payment appliance and an appliance operator; the customer having a business relationship with at least one institution hosting either an appliance operator or a customer operator; and
using data in the wallet to process the payment transaction.

2. The method of Claim 1 wherein:
a first appliance operator and a second appliance operator of the plurality of appliance operators being associated with a first network institution and a second network institution, respectively, and
the first network institution being distinguished from the second network institution.

3. The method of Claim 1 wherein at least one of the customer operators and of the appliance operators is a computer system.

4. The method of Claim 1 wherein the appliance operator and the customer operator involved in the payment transaction are members of a payment-roaming community.

5. The method of Claim 4 wherein the payment-roaming community comprising members of a first group hosting appliance operators and members of a second group hosting customer operators wherein the relationship between members of the first group and members of the second group is selected from a group consisting of:
each member of the first group has a business relationship with one or more members of the second group; and
each member of the first group has a business relationship with each member of the second group via a central payment-roaming authority.

6. The method of claim 1 wherein a central payment-roaming authority provides asymmetric secret keys and certificates for use by the plurality of appliance operators and the plurality of customers operators.

7. The method of Claim 6 wherein an appliance operator encrypting and signing messages activating the wallet associated with the customer and a customer operator decrypting and validating the encrypted messages.

8. The method of Claim 1 wherein an appliance operator uses a key recognized by only a customer operator and a customer operator uses a key recognized only by an appliance operator.

9. The method of Claim 1 wherein an appliance operator serves as a customer operator.

10. A network for transacting payments from customers, comprising:
a plurality of appliance operators each of which being associated with at least one payment appliance; and
a plurality of customer operators hosting wallets associated with the customers;
wherein
an appliance operator and a customer operator communicate with each other only if one passed an identification check by the other; and
upon a payment transaction,
a customer activating a wallet associated with the customer through a payment appliance and an appliance operator; the customer having a business relationship with at least one institution hosting either an appliance operator or a customer operator; and
using data in the wallet to process the payment transaction.

11. The network of Claim 10 wherein:
a first appliance operator and a second appliance operator of the plurality of appliance operators being associated with a first network institution and a second network institution, respectively; and
the first network institution being distinguished from the second network institution.

12. The network of Claim 10 wherein at least one of the customer operators and of the appliance operators is a computer system.

13. The network of Claim 10 wherein the appliance operator and the customer operator involved in the payment transaction are members of a payment-roaming community.

14. The network of Claim 13 wherein the payment-roaming community comprising members of a first group hosting appliance operators and members of a second group hosting customer operators wherein the relationship between members of the first group and members of the second group is selected from a group consisting of:
each member of the first group has a business relationship with one or more members of the second group; and
each member of the first group has a business relationship with each member of the second group via a central payment-roaming authority.

15. The network of claim 10 wherein a central payment-roaming authority provides asymmetric secret keys and certificates for use by the plurality of appliance operators and the plurality of customers operators.

16. The network of Claim 15 wherein an appliance operator encrypting and signing messages activating the wallet associated with the customer and a customer operator decrypting and validating the encrypted messages.

17. The network of Claim 10 wherein an appliance operator uses a key recognized by only a customer operator and a customer operator uses a key recognized only by an appliance operator.

18. The network of Claim 10 wherein an appliance operator serves as a customer operator.
